# FASCICULE DE BREVET EUROPEEN

(11) **EP 2 807 965 B1**
(45) Date de publication et mention de la délivrance du brevet: **17.02.2016**
(21) Numéro de dépôt: 14167262.6
(22) Date de dépôt: 06.05.2014
(51) Int. Cl.: A47J 36/00, A47J 37/10, A47J 45/06, A47J 36/02

(54) **Procédé de réalisation d'un canal de réception d'un capteur dans un récipient de cuisson**
Verfahren zur Herstellung eines Empfangskanals für einen Sensor in einem Kochbehälter
Method for forming a channel for receiving a sensor in a cooking vessel

(30) Priorité: 29.05.2013 FR 1354883
(43) Date de publication de la demande: 03.12.2014
(73) Titulaire: SEB S.A., 69130 Ecully (FR)
(72) Inventeur: Linglin, Benoît, 74370 Saint Martin Bellevue (FR); Bezzi, Sassi, 74600 Seynod (FR)
(74) Mandataire: Bourrières, Patrice

(56) Documents cités:
- EP-A1- 0 931 495
- EP-A1- 1 591 049
- EP-A1- 1 745 729

## Description

La présente invention concerne un procédé de réalisation d'un canal de réception d'un capteur dans un récipient de cuisson, plus particulièrement un canal de réception d'un capteur de température. Le récipient de cuisson est destiné à être disposé sur une plaque de cuisson, un brûleur ou analogue pour la cuisson d'aliments notamment une poêle, une casserole, une sauteuse, un faitout ou un autocuiseur

On connaît du document EP0931495 un récipient de cuisson comportant un fond, un capteur de température intégré entre le fond et une plaque perforée sertie sur le fond. Le capteur de température est relié par deux fils conducteurs à un circuit électronique pour traiter la grandeur mesurée et afficher la température. Le capteur de température et les deux fils conducteurs sont agencés dans un canal de réception réalisé dans le fond du récipient de cuisson. Le procédé de réalisation de ce canal de réception comporte les étapes :
a) Réaliser une rainure dans le fond,
b) Positionner une plaque perforée sur le fond et la sertir sur le fond par frappe, la rainure recouverte par la plaque perforée formant le canal de réception, le capteur étant préassemblé sur la plaque perforée.

Cependant, la demanderesse a constaté, lors de l'étape de sertissage de la plaque perforée sur le fond, un affaissement de la matière du fond ou de la plaque perforée dans la rainure. Ainsi, les dimensions du canal ne sont pas régulières sur sa largeur et sa hauteur et également sur sa longueur. Ces variations dimensionnelles peuvent endommager le capteur et les fils conducteurs.

De plus, le canal de réception peut être pollué par des corps étrangers dans le cas où le procédé de réalisation du récipient de cuisson comporte une étape de traitement de surface, notamment un sablage, une étape de dépose d'un revêtement par sérigraphie ou par pulvérisation ou une étape de finition, notamment une opération de rognage ou une opération de polissage.

Le but de la présente invention est de remédier aux inconvénients précités et de proposer un procédé de réalisation d'un canal de réception d'un capteur dans un récipient de cuisson qui permet d'obtenir un canal aux dimensions maitrisées et constantes d'un récipient à l'autre.

Un autre but de la présente invention est de proposer un procédé de réalisation d'un canal de réception d'un capteur dans un récipient de cuisson qui permet d'obtenir un canal exempt de pollutions liées aux étapes de finition du récipient de cuisson.

Un autre but de l'invention est de proposer un procédé de réalisation d'un canal de réception d'un capteur dans un récipient de cuisson qui soit économique à mettre en oeuvre.

Ces buts sont atteints avec un procédé de réalisation d'un canal de réception d'un capteur, notamment d'un capteur de température, dans un récipient de cuisson comportant une calotte comprenant un fond et une plaque perforée fixée sur le fond, le canal de réception étant agencé entre le fond et la plaque perforée, caractérisé en ce qu'il comprend les étapes suivantes :
a) Réaliser une rainure dans le fond de la calotte ou dans la plaque perforée,
b) Placer une barrette dans la rainure,
c) Positionner la plaque perforée sur le fond et la sertir sur le fond par frappe, la barrette maintenant la géométrie du canal formé entre le fond et la plaque perforée lors de l'opération de frappe,
d) Retirer la barrette pour dégager et former le canal de réception.

Ainsi, la barrette va permettre de garantir les dimensions du canal de réception du capteur lors de l'opération de sertissage par frappe de la plaque perforée sur le fond.

De préférence, la barrette est réalisée en au moins un matériau qui peut changer d'état ou qui peut être décomposé sous l'effet d'un processus thermique, physique ou chimique au cours de l'étape d) du procédé.

Cette disposition permet de retirer facilement la barrette par un procédé qui ne soumet ni le fond ni la plaque perforée à des contraintes qui pourraient induire des déformations du canal de réception.

Avantageusement, la barrette est réalisée en tout ou partie en cire qui passe de l'état solide à l'état liquide sous l'effet de la chaleur.

Avantageusement, la barrette est réalisée en au moins un matériau aggloméré, notamment à base de sable ou de plâtre, pouvant être décomposé sous l'effet de vibrations.

Ces dispositions permettent de retirer la barrette par un procédé très économique.

De préférence, la barrette est réalisée en au moins deux matériaux distincts.

Ainsi, une partie de la barrette est réalisée en un matériau courant, notamment pour former un squelette de la barrette, l'autre partie étant réalisée en un matériau qui peut changer d'état ou qui peut être décomposé sous l'effet d'un processus thermique, physique ou chimique. Cette disposition permet de réaliser une barrette de manière plus économique.

Avantageusement, la barrette comporte un squelette rigide, notamment un squelette métallique.

Cette disposition permet de réaliser la structure de la barrette de manière simple et économique. Cette disposition permet également d'améliorer la résistance de la barrette.

De préférence, la barrette comporte un squelette souple, notamment un fil et à l'étape d) du procédé, on tire sur le squelette pour désagréger la barrette.

La barrette comporte un fil qui peut être recouvert d'une poudre, d'un polymère, d'une cire, d'un plâtre qui se désagrège lorsqu'on tire sur le fil. Cette disposition permet de réaliser l'étape de retrait de la barrette de manière rapide et économique.

Avantageusement, le procédé comporte une étape de traitement de surface, notamment un sablage, et/ou une étape de dépose d'un revêtement par sérigraphie ou par pulvérisation entre l'étape c) et l'étape d).

De préférence, le procédé comporte une étape de finition, notamment une opération de rognage ou une opération de polissage entre l'étape c) et l'étape d).

Ainsi, le retrait de la barrette est réalisé après les opérations de traitement de surface et de finition pour permettre de protéger le canal de réception de dépôts de résidus liés à ces opérations. En conséquence, après le retrait de la barrette, le canal de réception du capteur est propre.

Avantageusement, la barrette présente sur sa longueur une section transversale constante.

Cette disposition permet de faciliter l'insertion du capteur dans le canal de réception.

Avantageusement, la barrette est réalisée en un matériau non compressible ou faiblement compressible aux pressions rencontrées lors du sertissage de la plaque perforée sur le fond.

L'invention concerne également un récipient de cuisson comportant une calotte comprenant un fond, une plaque perforée fixée sur une face externe de la calotte et un canal de réception d'un capteur, notamment d'un capteur de température, le canal de réception étant agencé entre le fond et la plaque perforée caractérisé en ce que le canal de réception est réalisé selon le procédé précédemment décrit.

De préférence, le récipient de cuisson est une poêle, une casserole, une sauteuse, un faitout ou un autocuiseur.

L'invention sera mieux comprise à l'étude des modes de réalisation pris à titre nullement limitatif et illustrés dans les figures annexées dans lesquelles :
- La figure 1 illustre une vue en perspective d'un disque dans lequel a été réalisé une rainure, une barrette allant être positionnée dans la rainure selon un mode particulier de réalisation de l'invention ;
- La figure 2 illustre une vue en coupe partielle du disque suivant la ligne II - II illustré à la figure 1 ;
- La figure 3 illustre une vue en perspective du disque, de la barrette positionnée dans la rainure et d'une plaque perforée sertie selon un mode particulier de réalisation de l'invention ;
- La figure 4 illustre une vue en coupe partielle du disque suivant la ligne IV - IV illustré à la figure 3 ;
- La figure 5 illustre une vue en perspective d'une calotte issue du disque, de la barrette positionnée dans la rainure et de la plaque perforée sertie de la figure 3 ;
- La figure 6 illustre une vue schématique de principe du retrait de la barrette de la calotte illustrée à la figure 5.

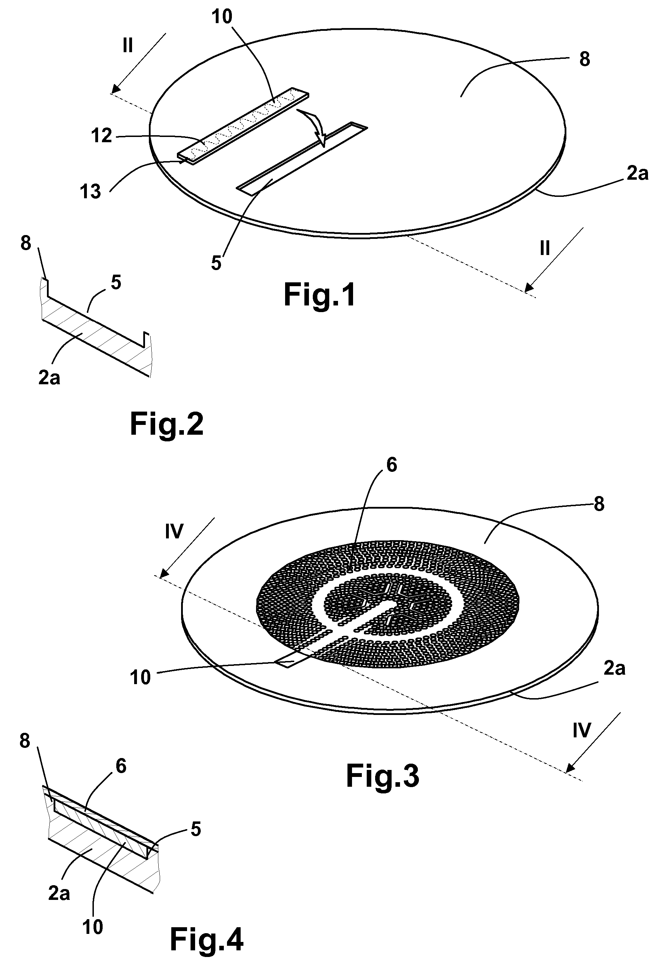

Les figures 1 à 6 illustrent un mode de réalisation d'une calotte 2 d'un récipient de cuisson 1 comportant un canal de réception 11 d'un capteur, par exemple un capteur de température (non représenté sur les figures). La calotte 2 comporte un fond 3 et une plaque perforée 6 fixée sur le fond 3, le canal de réception 11 étant agencé entre le fond 3 et la plaque perforée 6.

La calotte 2 est issue d'une feuille en métal ou alliage léger, tel que l'aluminium, en forme de disque 2a tel que visible à la figure 1. L'étape a) du procédé consiste à réaliser une rainure 5 dans une face externe 8 du disque 2a, de préférence par frappe à froid. Le disque 2a est en aluminium d'épaisseur comprise entre 2 et 6 mm et la rainure 5 présente une largeur comprise entre 1 et 15mm et une profondeur comprise entre 1 et 4mm. La rainure 5 s'étend radialement dans la face externe 8 depuis le centre du disque 2a.

Dans une variante de mise en oeuvre du procédé, la calotte 2 peut être réalisée par fonderie d'aluminium. Dans ce cas, la rainure 5 est prévue au moulage. L'épaisseur de la calotte 2 en fonderie peut être comprise entre 5 et 10mm.

L'étape b) du procédé consiste à rapporter dans la rainure 5 une barrette 10 réalisée en un matériau non compressible (Fig.1).

L'étape c) du procédé consiste à positionner la plaque perforée 6 sur le disque 2a pour coiffer au moins partiellement la face externe 8 et la barrette 10. La plaque perforée 6 est en métal ou alliage ayant une limite élastique significativement plus élevé que celle de l'aluminium du disque 2a, notamment en acier inoxydable ou en cuivre. De préférence, la plaque perforée 6 a la forme d'un disque. Toutefois, la plaque perforée 6 pourrait avoir d'autres formes, notamment une forme polygonale, ou celle d'un anneau. La plaque perforée 6 pourrait éventuellement être divisée en plusieurs secteurs. La plaque perforée 6 est fixée sur le disque 2a par une opération de frappe (Fig.3). Le procédé de réalisation de la plaque perforée 6 et le procédé de fixation de la plaque perforée 6 sur le disque 2a sont présentés plus en détails dans la description des brevets français n°FR 2 693 894 et n°FR 2 711 051.

Lors de l'opération de sertissage, la plaque perforée 6 est encastrée dans la matière du disque 2a. Dans un mode préférentiel de réalisation, la barrette 10 présente une section transversale ajustée à une section transversale de la rainure 5 coiffée par la plaque perforée 6, une fois celle-ci sertie sur le disque 2a. Ainsi, la barrette 10 va permettre d'éviter et/ou limiter les déformations de la rainure 5 et de la plaque perforée 6 lors de l'opération de sertissage. Par exemple, la section transversale de la barrette 10 est rectangulaire, sensiblement constante sur la longueur de la barrette 10.

Dans un mode de réalisation, la barrette 10 est réalisée par moulage d'une cire qui passe de l'état solide à l'état liquide sous l'effet de la chaleur. Une telle opération de moulage est réalisée dans un moule souple pour faciliter le démoulage de la barrette 10.

Dans une variante de réalisation, la barrette 10 est réalisée en un matériau aggloméré, notamment à base de sable ou de plâtre, pouvant être décomposé sous l'effet de vibrations.

Avantageusement, la barrette 10 peut comporter un squelette 12 qui permet d'augmenter sa résistance. Ainsi la manipulation de la barrette 10 est facilitée lors des différentes opérations de mise en oeuvre du procédé. Le squelette peut être souple, notamment formé par un fil 12 noyé dans le matériau de la barrette pour permettre un retrait plus facile et plus complet de ce matériau. Dans une variante de réalisation, la barrette 10 peut comporter un squelette 12 rigide.

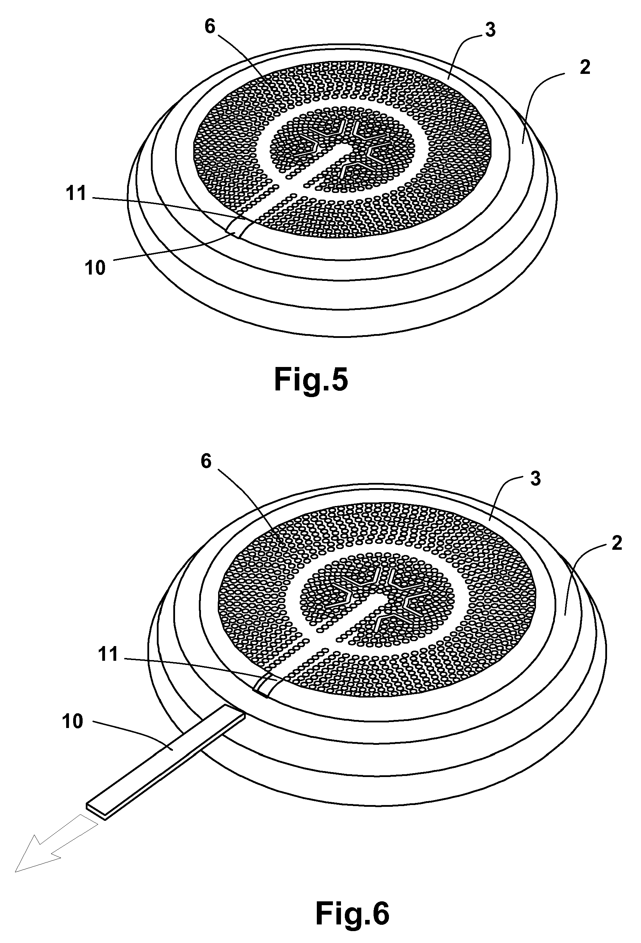

Dans le mode de réalisation où la calotte 2 est issue d'un disque 2a, le procédé comporte une étape de mise en forme de la calotte 2 par frappe (Fig.5). La face externe 8 du disque comporte une partie centrale qui forme le fond 3. Lors de cette opération de frappe, la barrette 10 reste agencée dans la rainure 5, sous la plaque perforée 6 sertie.

Une fois la calotte 2 formée, le procédé peut comporter une ou plusieurs étapes de traitement de surface de l'intérieur et/ou de l'extérieur de la calotte 2. Ces étapes de traitement de surface peuvent consister en un sablage, en une dépose d'un revêtement anti adhésif ou de décoration par sérigraphie ou par pulvérisation. Le procédé peut comporter une ou plusieurs étapes de finition de la calotte 2, notamment une opération de rognage du bord de la calotte 2 ou une opération de polissage.

Lors des étapes de traitements de surface et de finition, la barrette 10 reste agencée dans la rainure 5, sous la plaque perforée 6 sertie.

Conformément à la figure 6, l'étape d) du procédé consiste à retirer la barrette 10 pour libérer et former le canal de réception 11. Dans le mode de réalisation dans lequel la barrette 10 est en cire, la calotte 2 sera portée à une température supérieure à la température de fusion de la cire dans une position inclinée. Ainsi, la cire va se liquéfier et s'écouler pour libérer le canal de réception 11.

Dans la variante de réalisation dans laquelle la barrette 10 est réalisée en un matériau aggloméré, notamment à base de sable ou de plâtre, la calotte 2 est agencée sur une table vibrante en position inclinée. Ainsi, sous l'effet des vibrations, le matériau de la barrette 10 va se désagréger et s'écouler hors du canal de réception 11.

Dans les variantes dans lesquelles la barrette 10 comporte un squelette 12, le squelette 12 peut comporter une extrémité 13 (Fig. 1) qui s'étend radialement au-delà de la plaque perforée 6. Ainsi, lors du retrait de la barrette 10, l'extrémité 13 peut être saisie par un outil et une traction est appliquée sur cette extrémité 13 pour retirer le squelette 12. Cette opération permet de faciliter la désagrégation et le retrait du matériau de la barrette 10 du canal de réception 11.

Le canal de réception est dimensionné pour permettre l'insertion d'un capteur de température muni de deux éléments conducteurs (non représentés sur les figures). Le canal de réception présente un axe longitudinal selon lequel le capteur muni des deux éléments conducteurs est inséré.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, la rainure 5 est réalisée dans la plaque perforée 6 ou partiellement dans la plaque perforée 6 et partiellement dans le fond 3 de la calotte 2.

## Revendications

1. Procédé de réalisation d'un canal de réception (11) d'un capteur, notamment d'un capteur de température, dans un récipient de cuisson (1) comportant une calotte (2) comprenant un fond (3) et une plaque perforée (6) fixée sur le fond (3), ledit canal de réception (11) étant agencé entre le fond (3) et la plaque perforée (6), **caractérisé en ce qu'**il comprend les étapes suivantes :
a) Réaliser une rainure (5) dans le fond (3) de la calotte (2) ou dans la plaque perforée (6),
b) Placer une barrette (10) dans la rainure (5),
c) Positionner la plaque perforée (6) sur le fond (3) et la sertir sur le fond (3) par frappe, la barrette (10) maintenant la géométrie du canal de réception (11) formé entre le fond (3) et la plaque perforée (6) lors de l'opération de frappe,
d) Retirer la barrette (10) pour dégager et former le canal de réception (11).

2. Procédé de réalisation d'un canal de réception (11) dans un récipient de cuisson (1) selon la revendication 1, **caractérisé en ce que** la barrette (10) est réalisée en au moins un matériau qui peut changer d'état ou qui peut être décomposé sous l'effet d'un processus thermique, physique ou chimique au cours de l'étape d) du procédé.

3. Procédé de réalisation d'un canal de réception (11) dans un récipient de cuisson (1) selon la revendication 2, **caractérisé en ce que** la barrette (10) est réalisée en tout ou partie en cire qui passe de l'état solide à l'état liquide sous l'effet de la chaleur.

4. Procédé de réalisation d'un canal de réception (11) dans un récipient de cuisson (1) selon la revendication 2, **caractérisé en ce que** la barrette (10) est réalisée en au moins un matériau aggloméré, notamment à base de sable ou de plâtre, pouvant être décomposé sous l'effet de vibrations.

5. Procédé de réalisation d'un canal de réception (11) dans un récipient de cuisson (1) selon l'une quelconque des revendications précédentes, **caractérisé en ce que** la barrette (10) est réalisée en au moins deux matériaux distincts.

6. Procédé de réalisation d'un canal de réception (11) dans un récipient de cuisson (1) selon la revendication 5, **caractérisé en ce que** la barrette (10) comporte un squelette (12) rigide, notamment un squelette métallique.

7. Procédé de réalisation d'un canal de réception (11) dans un récipient de cuisson (1) selon la revendication 5, **caractérisé en ce que** la barrette (10) comporte un squelette (12) souple, notamment un fil et **en ce qu'**à l'étape d), on tire sur le squelette (12) pour désagréger la barrette (10).

8. Procédé de réalisation d'un canal de réception (11) dans un récipient de cuisson (1) selon l'une quelconque des revendications précédentes, **caractérisé en ce qu'**il comporte une étape de traitement de surface, notamment un sablage, et/ou une étape de dépose d'un revêtement par sérigraphie ou par pulvérisation entre l'étape c) et l'étape d).

9. Procédé de réalisation d'un canal de réception (11) dans un récipient de cuisson (1) selon l'une quelconque des revendications précédentes, **caractérisé en ce qu'**il comporte une étape de finition, notamment une opération de rognage ou une opération de polissage entre l'étape c) et l'étape d).

10. Procédé de réalisation d'un canal de réception (11) dans un récipient de cuisson (1) selon l'une quelconque des revendications précédentes, **caractérisé en ce que** la barrette (10) présente sur sa longueur une section transversale constante.

11. Procédé de réalisation d'un canal de réception (11) dans un récipient de cuisson (1) selon l'une quelconque des revendications précédentes, **caractérisé en ce que** la barrette (10) est réalisée en un matériau non compressible ou faiblement compressible aux pressions rencontrées lors du sertissage de la plaque perforée (6) sur le fond (3).

## Patentansprüche

1. Verfahren zur Herstellung eines Aufnahmekanals (11) für einen Sensor, insbesondere eines Temperatursensors, in einem Kochbehälter (1) mit einer Kalotte (2), die einen Boden (3) und eine Lochplatte (6) aufweist, die am Boden (3) befestigt ist, wobei der genannte Aufnahmekanal (11) zwischen dem Boden (3) und der Lochplatte (6) angeordnet ist, **dadurch gekennzeichnet, dass** es die folgenden Schritte umfasst:
a) Erzeugung einer Rille (5) im Boden (3) der Kalotte (2) oder in der Lochplatte (6),
b) Einsetzen einer Leiste (10) in die Rille (5),
c) Positionierung der Lochplatte (6) auf dem Boden (3) und Bördeln der Platte auf den Boden (3), wobei die Leiste (10) die Geometrie des Aufnahmekanals (11) formt, der sich beim Bördelvorgang zwischen dem Boden (3) und der Lochplatte (6) bildet,
d) Entfernung der Leiste (10), um den Aufnahmekanal (11) freizugeben und zu formen.

2. Verfahren zur Herstellung eines Aufnahmekanals (11) in einem Kochbehälter (1) nach Anspruch 1, **dadurch gekennzeichnet, dass** die Leiste (10) aus mindestens einem Material besteht, das seinen Zustand ändern kann oder das sich durch ein thermisches, physikalisches oder chemisches Verfahren im Rahmen von Schritt d) des Verfahrens zersetzt.

3. Verfahren zur Herstellung eines Aufnahmekanals (11) in einem Kochbehälter (1) nach Anspruch 2, **dadurch gekennzeichnet, dass** die Leiste (10) ganz oder teilweise aus Wachs besteht, das unter Wärmezufuhr vom festen in den flüssigen Zustand übergeht.

4. Verfahren zur Herstellung eines Aufnahmekanals (11) in einem Kochbehälter (1) nach Anspruch 2, **dadurch gekennzeichnet, dass** die Leiste (10) aus mindestens einem gepressten Material besteht, insbesondere auf Basis von Sand oder Gips, das sich unter dem Einfluss von Vibrationen zersetzt.

5. Verfahren zur Herstellung eines Aufnahmekanals (11) in einem Kochbehälter (1) nach einem der vorhergehenden Ansprüche, **dadurch gekennzeichnet, dass** die Leiste (10) aus mindestens zwei unterschiedlichen Materialien besteht.

6. Verfahren zur Herstellung eines Aufnahmekanals (11) in einem Kochbehälter (1) nach Anspruch 5, **dadurch gekennzeichnet, dass** die Leiste (10) ein starres Gerippe (12) aufweist, insbesondere ein Gerippe aus Metall.

7. Verfahren zur Herstellung eines Aufnahmekanals (11) in einem Kochbehälter (1) nach Anspruch 5, **dadurch gekennzeichnet, dass** die Leiste (10) ein biegsames Gerippe (12) aufweist, insbesondere aus Draht, und dass in Schritt d) am Gerippe (12) gezogen wird, um die Leiste (10) zu zersetzen.

8. Verfahren zur Herstellung eines Aufnahmekanals (11) in einem Kochbehälter (1) nach einem der vorhergehenden Ansprüche, **dadurch gekennzeichnet, dass** es einen Schritt zur Oberflächenbehandlung umfasst, insbesondere Sandstrahlung, und/oder einen Schritt zum Aufbringen einer Beschichtung durch Siebdruck oder Spritzauftrag zwischen Schritt c) und Schritt d).

9. Verfahren zur Herstellung eines Aufnahmekanals (11) in einem Kochbehälter (1) nach einem der vorhergehenden Ansprüche, **dadurch gekennzeichnet, dass** es einen Endbearbeitungsschritt aufweist, insbesondere durch Beschneiden oder Polieren zwischen Schritt c) und Schritt d).

10. Verfahren zur Herstellung eines Aufnahmekanals (11) in einem Kochbehälter (1) nach einem der vorhergehenden Ansprüche, **dadurch gekennzeichnet, dass** die Leiste (10) über die gesamte Länge einen konstanten Querschnitt aufweist.

11. Verfahren zur Herstellung eines Aufnahmekanals (11) in einem Kochbehälter (1) nach einem der vorhergehenden Ansprüche, **dadurch gekennzeichnet, dass** die Leiste (10) aus einem Material besteht, das beim Bördeln der Lochplatte (6) auf den Boden (3) nicht oder kaum komprimiert wird.

## Claims

1. Method of making a receiving channel (11) of a sensor, in particular a temperature sensor, in a cooking vessel (1) having a cap (2) comprising a bottom (3) and a perforated plate (6) fixed to the bottom (3), said receiving channel (11) being arranged between the bottom (3) and the perforated plate (6), **characterised in that** it features the following steps:
a) Making a groove (5) in the bottom (3) of the cap (2) or in the perforated plate (6),
b) Placing a strip (10) in the groove (5),
c) Positioning the perforated plate (6) on the bottom (3) and fastening it to the bottom (3) by striking the bar (10), now the geometry of the receiving channel (11) formed between the bottom (3) and the perforated plate (6) during the striking operation,
d) Removing the bar (10) to secure and form the receiving channel (11).

2. Manufacturing method for a receiving channel (11) in a cooking vessel (1) according to claim 1, **characterised in that** the bar (10) is made of at least one material that can change state or may be decomposed under the effect of a thermal, physical or chemical process during step d) of the procedure.

3. Manufacturing method for a receiving channel (11) in a cooking vessel (1) according to claim 2, **characterised in that** the bar (10) is fully or partially made of wax which changes from a solid state to a liquid state under the influence of heat.

4. Manufacturing method for a receiving channel (11) in a cooking vessel (1) according to claim 2, **characterised in that** the bar (10) is made of at least one agglomerated material, specifically based on sand or plaster, and may be decomposed under the effect of vibration.

5. Manufacturing method for a receiving channel (11) in a cooking vessel (1) according to any one of the previous claims, **characterised in that** the bar (10) is made from at least two different materials.

6. Manufacturing method for a receiving channel (11) in a cooking vessel (1) according to claim 5, **characterised in that** the bar (10) has a rigid skeleton (12), specifically a metal skeleton.

7. Manufacturing method for a receiving channel (11) in a cooking vessel (1) according to claim 5, **characterised in that** the bar (10) has a flexible skeleton (12), specifically a wire, and **in that** the bar (10) is detached by pulling on the skeleton (12), as in step d).

8. Manufacturing method for a receiving channel (11) in a cooking vessel (1) according to any one of the previous claims, **characterised in that** it comprises a surface treatment step, specifically a sanding and/or coating step using screen printing or spray coating between step c) and step d).

9. Manufacturing method for a receiving channel (11) in a cooking vessel (1) according to any one of the previous claims, **characterised in that** it comprises a finishing step, specifically a trimming or polishing operation between step c) and step d).

10. Manufacturing method for a receiving channel (11) in a cooking vessel (1) according to any one of the previous claims, **characterised in that** the bar (10) has a constant cross-section over its length.

11. Manufacturing method for a receiving channel (11) in a cooking vessel (1) according to any one of the previous claims, **characterised in that** the bar (10) is made from a material that is non-compressible or slightly compressible under the pressures applied when fastening the perforated plate (6) to the bottom (3).
